Europäisches Patentamt

**European Patent Office**

**Office européen des brevets**

(11) Numéro de publication: **0 129 492 B1**

(12) **FASCICULE DE BREVET EUROPEEN**

(45) Date de publication de fascicule du brevet: **04.08.93** (51) Int. Cl.⁵: **H02J 3/06**, H02J 3/24

(21) Numéro de dépôt: **84450014.0**

(22) Date de dépôt: **25.05.84**

(54) **Méthode et système d'interconnexion de réseaux triphasés synchrones ou asynchrones au moyen d'impédances réactives variables.**

(30) Priorité: **14.06.83 CA 430314**

(43) Date de publication de la demande:
**27.12.84 Bulletin 84/52**

(45) Mention de la délivrance du brevet:
**04.08.93 Bulletin 93/31**

(84) Etats contractants désignés:
**AT BE CH DE FR GB IT LI LU NL SE**

(56) Documents cités:
**US-A- 2 218 383**
**US-A- 3 275 838**
**US-A- 3 567 954**
**US-A- 4 234 843**

(73) Titulaire: **HYDRO-OUEBEC**
**75, West Dorchester Boulevard**
**Montreal, Ouébec H2Z 1A4(CA)**

(72) Inventeur: **Roberge, Gérald**
**14 Le Roy**
**Repentigny Ouébec J6A 1P6(CA)**
Inventeur: **Gavrilovic, Momcilo**
**726 Victoria**
**Westmount Ouébec H3Y 2S1(CA)**
Inventeur: **Pelletier, Pierre**
**840 Rivière-aux-Pins**
**Boucherville Ouébec J4B 3A9(CA)**

(74) Mandataire: **Thébault, Jean-Louis**
**Cabinet Thébault S.A. 1 Allées de Chartres**
**F-33000 Bordeaux (FR)**

Rank Xerox (UK) Business Services
(3.10/3.6/3.3.1)

EP 0 129 492 B1

## Description

La présente invention concerne une méthode et un système d'interconnexion entre deux réseaux électriques alternatifs triphasés, asynchrones ou synchrones, et fonctionnant à des tensions alternatives de fréquences égales ou voisines.

Dans ce domaine, on sait que la plupart des systèmes d'interconnexion présentement en opération sont constitués par des attaches à courant continu qui effectuent d'un réseau à l'autre une conversion CA-CC-CA du courant électrique. Un tel système d'interconnexion a le désavantage de nécessiter l'usage de compensateurs pour neutraliser la puissance réactive interne afin de maintenir la tension au niveau désiré aux points d'interconnexion, et de filtres pour atténuer les harmoniques générées par le système.

On connait également un autre système pour l'interconnexion de deux réseaux alternatifs fonctionnant à des fréquences différentes. Ce système qui est décrit dans le brevet des Etats-Unis n° 3.275.838 (ALMSTROM) délivré le 27 septembre 1966 à ASEA, comporte deux convertisseurs de courant électrique respectivement connectés aux deux réseaux alternatifs. Un dispositif de régulation mesure les fréquences respectives des deux réseaux ainsi que la puissance transmise d'un réseau vers l'autre et agit sur au moins un des convertisseurs pour contrôler et maintenir à un niveau désiré le transfert de puissance active. Cette solution nécessite l'usage d'un circuit complexe et une conversion du courant électrique.

Le brevet des Etats-Unis n° 2.218.383 (HERSKIND), délivré le 15 octobre 1940 à la Société General Electric, propose un système d'interconnexion entre deux réseaux alternatifs de fréquences différentes, utilisant un circuit formé de transformateurs, de valves électriques, d'un convertisseur de phase et autres composants pour obtenir un transfert de puissance électrique d'un réseau triphasé à un réseau monophasé, le réseau triphasé fonctionnant à une fréquence plus élevée que le réseau monophasé. Ce genre de système d'interconnexion est difficilement adaptable pour établir un transfert de puissance active désiré entre deux réseaux alternatifs triphasés asynchrones ou synchrones.

Par ailleurs, par le brevet des Etats-Unis N° 3.567.954, on connaît un système d'interconnexion entre deux réseaux alternatifs dans lequel le transit de puissance est géré par un contrôle d'impédance longiligne des réseaux interconnectés. Ce transit de puissance est assuré par la succession de chacun des sytèmes d'impédances, constitués à l'aide d'inductances saturables, de façon à ajuster l'impédance longiligne désirée indépendamment des angles de ces mêmes réseaux.

Par suite, l'ajustement du transit de puissance active de l'interconnexion dépend des impédances de lignes externes en série avec ces inductances saturables.

De plus, ces inductances saturables absorbent une quantité de puissance réactive proportionnelle au transit de puissance et génèrent un angle d'interconnexion positif qui s'ajoute aux angles des impédances des lignes extérieures.

La présente invention vise à pallier les inconvénients des systèmes connus.

La présente invention a pour objet une nouvelle méthode ainsi qu'un nouveau système pour l'interconnexion de deux réseaux triphasés asynchrones ou synchrones, lequel système est de structure simple, facilement contrôlable par des méthodes connues, et utilisant des composants disponibles sur le marché. En outre, ce nouveau système ne requiert ni compensateur, ni filtre comme c'est le cas pour les attaches à courant continu ci-dessus mentionnées.

Plus particulièrement, la présente invention propose un système pour l'interconnexion d'un premier et d'un second réseau électrique alternatif, asynchrone ou synchrone, et triphasé, fonctionnant à des tensions alternatives de fréquences égales ou voisines, chaque réseau comportant une première, une seconde et une troisième phase fonctionnant à la tension de ce réseau, la tension de chaque phase du premier réseau et la tension de la phase correspondante du second réseau étant décalées l'une par rapport à l'autre d'un angle constant ou variant dans le temps, un ensemble d'impédances réactives variables triphasées reliant entre eux les deux réseaux, les impédances réactives variables triphasées dudit ensemble étant commandées pour établir (a) trois premières liaisons ayant chacune une première susceptance (11) entre les premières, secondes et troisièmes phases des premier et second réseaux, respectivement, (b) trois secondes liaisons ayant chacune une seconde susceptance (12), respectivement entre la première phase du premier réseau et la troisième phase du second réseau, entre la seconde phase du premier réseau et la première phase du second réseau, et entre la troisième phase du premier réseau et la seconde phase du second réseau et (c) trois troisièmes liaisons ayant chacune une troisième susceptance (13), respectivement entre la première phase du premier réseau et la seconde phase du second réseau, entre la seconde phase du premier réseau et la troisième phase du second réseau, et entre la troisième phase du premier réseau et la première phase du second réseau, lesdites première, seconde et troisième susceptances (11,12 et 13) desdites premières, secondes et troisièmes liaisons variant avec les impédances réactives variables triphasées dudit ensemble, caractérisé en ce qu'à travers l'ensemble d'impédances est réalisé un

2

transfert de puissance active désiré d'un des premier et second réseaux à l'autre de ces réseaux, lesdites impédances réactives variables comprenant des condensateurs variables et des inductances variables, et en ce que le système comprend des moyens de régulation (5) pour mesurer des paramètres électriques associés à au moins une phase correspondante des premier et second réseaux, lesdits paramètres électriques comprenant le courant qui circule dans ladite phase entre ledit premier réseau et ledit système, le courant qui circule dans ladite phase entre ledit second réseau et ledit système, la tension de ladite phase appliquée audit système du côté dudit premier réseau, et la tension de ladite phase appliquée audit système du côté du second réseau, lesdits moyens de régulation servant également à commander les impédances variables triphasées de façon à ce que lesdits paramètres électriques mesurés représentent un transfert de puissance active qui corresponde audit transfert de puissance active désiré d'un des premier et second réseaux à l'autre de ces réseaux, tout en maintenant à un niveau désiré une puissance réactive supportée par ledit système.

Selon un mode de réalisation préféré du système selon l'invention, les moyens de régulation comportent des moyens pour commander , lorsque des oscillations surviennent sur au moins l'un des premier et second réseaux et en fonction des paramètres électriques mesurés, les impédances réactives variables triphasées de l'ensemble de façon à établir à travers ledit ensemble un transfert de puissance active modulé d'un des premier et second réseaux à l'autre de ces réseaux à des fins d'amortissement desdites oscillations, ce transfert de puissance modulé constituant alors ledit transfert de puissance active désiré.

La présente invention a également pour objet une méthode pour interconnecter un premier et un second réseau électrique alternatif, asynchrone ou synchrone, et triphasé, fonctionnant à des tensions alternatives de fréquences égales ou voisines, chaque réseau comportant une première, une seconde et une troisième phase fonctionnant à la tension de ce réseau, la tension de chaque phase du premier réseau et la tension de la phase correspondante du second réseau étant décalées l'une par rapport à l'autre d'un angle constant ou variant dans le temps, un ensemble d'impédances réactives variables triphasées reliant entre eux les deux réseaux, (a) trois premières liaisons ayant chacune une première susceptance (11), respectivement entre les premières, secondes et troisièmes phases des premier et second réseaux, (b) trois secondes liaisons ayant chacune une seconde susceptance (12), respectivement entre la première phase du premier réseau et la troisième phase du second réseau, entre la seconde phase du premier réseau et la première phase du second réseau, et entre la troisième phase du premier réseau et la seconde phase du second réseau, et, (c) trois troisièmes liaisons ayant chacune une troisième susceptance (13), respectivement entre la première phase du premier réseau et la seconde phase du second réseau, entre la seconde phase du premier réseau et la troisième phase du second réseau, et entre la troisième phase du premier réseau et la première phase du second réseau, lesdites première, seconde et troisième susceptances (11,12 et 13) desdites premières, secondes et troisièmes liaisons variant avec les impédances réactives triphasées dudit ensemble, ladite méthode étant caractérisée en ce que :

on établit, à travers l'ensemble d'impédances, un transfert de puissance active désiré d'un des premier et second réseaux à l'autre de ces réseaux, lesdites impédances réactives comprenant des condensateurs variables et des inductances variables ;

on mesure des paramètres électriques associés à au moins une phase correspondante des premier et second réseaux, lesdits paramètres électriques comprenant le courant qui circule dans ladite phase entre ledit premier réseau et ledit système, le courant qui circule dans ladite phase entre ledit second réseau et ledit système, la tension de ladite phase appliquée audit système du côté du premier réseau, et la tension de ladite phase appliquée audit système du côté du second réseau, et

on commande des impédances réactives variables triphasées de façon à ce que lesdits paramètres électriques mesurés représentent un transfert de puissance active qui corresponde audit transfert de puissance active désiré d'un des premier et second réseaux à l'autre de ces réseaux, tout en maintenant à un niveau désiré une puissance réactive supportée par ledit système.

Selon une caractéristique préférée de la méthode selon l'invention, les impédances réactives variables triphasées de l'ensemble sont commandées , lorsque surviennent des oscillations sur au moins l'un des premier et second réseaux, en fonction des paramètres électriques mesurés de façon à établir à travers ledit ensemble un transfert de puissance active modulé d'un des premier et second réseaux à l'autre de ces réseaux à des fins d'amortissement desdites oscillations, ce transfert de puissance active modulé constituant alors le transfert de puissance active désiré.

Les impédances réactives variables de l'ensemble peuvent être commandées en fonction des paramètres électriques mesurés de façon à annuler la puissance réactive engagée dans le transfert de puissance active désiré ou de façon à ce que ledit ensemble génère ou absorbe une certaine quantité de puissance réactive selon les besoins des premier et second réseaux.

EP 0 129 492 B1

Selon une caractéristique préférée de la présente invention, les paramètres électriques mesurés comprennent, pour chaque phase correspondante des premier et second réseaux, une première et une seconde tensions appliquées à l'ensemble et provenant de cette phase correspondante du premier et du second réseaux, respectivement, et un premier et un second courants entrant ou sortant de l'ensemble et correspondant également à cette phase correspondante du premier et du second réseaux, respectivement.

Selon une autre caractéristique préférée de la présente invention, les impédances réactives variables de l'ensemble sont commandées également en fonction d'une première valeur de référence représentative du transfert de puissance active désiré d'un des premier et second réseaux à l'autre de ces réseaux, et d'une seconde valeur de référence représentative du niveau désiré de la puissance réactive engagée dans le transfert de puissance active désiré.

Selon la méthode d'interconnexion décrite plus haut, il serait également possible d'interconnecter deux réseaux triphasés asynchrones ou synchrones à l'aide d'un ensemble d'impédances réactives variables triphasées reliées entre deux systèmes de tensions polyphasées qui seraient générés par des transformateurs dont les enroulements primaires seraient reliés aux deux réseaux et dont les enroulements secondaires produiraient ces systèmes de tensions polyphasées. De tels systèmes de tension pourraient comporter, par exemple, 6, 12 ou 24 phases.

Les avantages et autres caractéristiques de la présente invention ressortiront de la description qui va suivre, donnée à titre d'exemple seulement, avec référence aux figures des dessins dans lesquels:

La Figure 1 est un diagramme unifilaire d'un mode de réalisation du système d'interconnexion selon l'invention interconnectant deux réseaux triphasés asynchrones ou synchrones;

La Figure 2 illustre un exemple de réalisation des impédances réactives variables du système d'interconnexion de la Figure 1;

Les Figures 3a et 3b montrent un autre exemple de réalisation des impédances réactives variables triphasées qui peuvent être utilisées dans le système d'interconnexion selon l'invention; et

La Figure 4 est un schéma unifilaire fonctionnel du régulateur du système d'interconnexion illustré à la Figure 1.

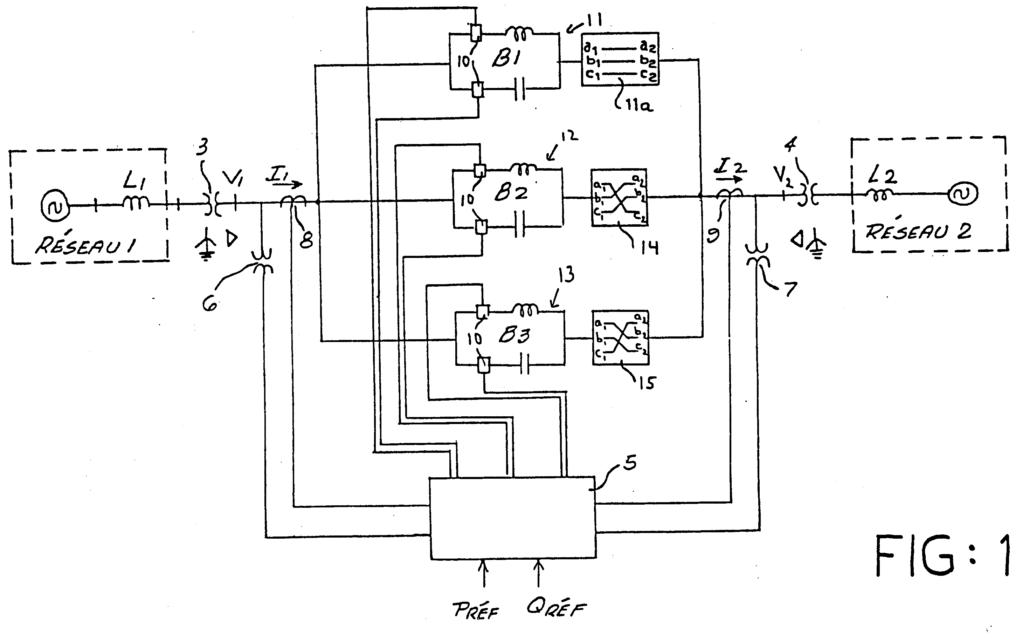

Le système d'interconnexion triphasé asynchrone ou synchrone illustré sur la Figure 1 par un diagramme unifilaire, comprend trois impédances réactives variables triphasées comportant respectivement trois impédances réactives variables monophasées 11 de susceptance $B_1$, trois impédances réactives variables monophasées 12 de susceptance $B_2$, et trois impédances réactives variables monophasées 13 de susceptance $B_3$. Les trois impédances réactives variables monophasées 11 interconnectent les phases $a_1$, $b_1$ et $c_1$ du réseau 1 aux phases $a_2$, $b_2$ et $c_2$ du réseau 2, respectivement, tel qu'illustré schématiquement en 11a, et les trois impédances réactives variables 12 interconnectent les phases $a_1$, $b_1$ et $c_1$ du réseau 1 aux phases $c_2$, $a_2$ et $b_2$ du réseau 2, respectivement, tel qu'illustré schématiquement en 14. Dans le dernier cas, les trois impédances réactives monophasées 12 relient les réseaux 1 et 2 en effectuant une transposition inverse des trois phases du réseau 1 vers le réseau 2. De la même façon, les trois impédances réactives variables monophasées 13 interconnectent les phases $a_1$, $b_1$ et $c_1$ du réseau 1 aux phases $b_2$, $c_2$ et $a_2$ du réseau 2, respectivement, tel qu'illustré schématiquement en 15. Cette fois-ci, les impédances réactives monophasées 13 relient les réseaux 1 et 2 en effectuant une transposition directe des phases du réseau 1 vers le réseau 2.

Deux transformateurs 3 et 4 relient les trois impédances réactives variables triphasées respectivement aux réseaux 1 et 2. Ces deux transformateurs 3 et 4 comprennent chacun d'un côté trois enroulements reliés en étoile avec neutre à la masse et connectés aux trois phases des réseaux 1 et 2, respectivement, et de l'autre côté trois enroulements reliés en delta et connectés aux trois impédances réactives variables triphasées du système d'interconnexion.

Il est à noter que le rapport des transformateurs 3 et 4 peut prendre n'importe quelle valeur selon les besoins. De plus, lorsque la tension des deux réseaux est assez basse pour permettre l'utilisation de valves à thyristor numérotées 10 sur la Figure 1, on peut relier les trois impédances réactives variables triphasées du système d'interconnexion directement aux deux réseaux sans recourir à l'utilisation de transformateurs, qui dans un tel cas peuvent être omis.

Les deux réseaux alternatifs 1 et 2, qui, tel que déjà mentionné, fonctionnent de façon asynchrone ou synchrone et à des tensions alternatives de fréquences égales ou voisines, incluent respectivement des inductances de ligne $L_1$ et $L_2$.

Tel qu'illustré à la Figure 1, les tensions $V_1$ et $V_2$ représentent les tensions provenant des trois phases correspondantes des réseaux 1 et 2, respectivement, et appliquées aux trois impédances réactives variables triphasées. Les courants $I_1$ et $I_2$ représentent les courants correspondant aux mêmes phases correspondantes des réseaux 1 et 2, respectivement. Selon l'exemple illustré, le courant $I_1$ entre dans les impédances variables tandis que le courant $I_2$ sort de ces impédances.

4

Les impédances variables monophasées 11, 12 et 13 sont commandées par un régulateur numéroté 5 sur la Figure 1, de manière à établir un transfert de puissance active désiré d'un réseau vers l'autre. Le transfert de puissance active désiré d'un réseau vers l'autre établi par le régulateur 5 peut être, lorsque des oscillations quelconques surviennent sur au moins l'un des réseaux, un transfert de puissance active modulé de telle sorte que cette modulation de puissance active amortisse ces oscillations. Ce régulateur 5 mesure les tensions $V_1$ et $V_2$ provenant de chaque phase correspondante des deux réseaux 1 et 2 par l'intermédiaire de transformateurs de tension 6 et 7, et les courants $I_1$ et $I_2$ de chaque phase correspondante des deux réseaux par l'intermédiaire de transformateurs de courant 8 et 9.

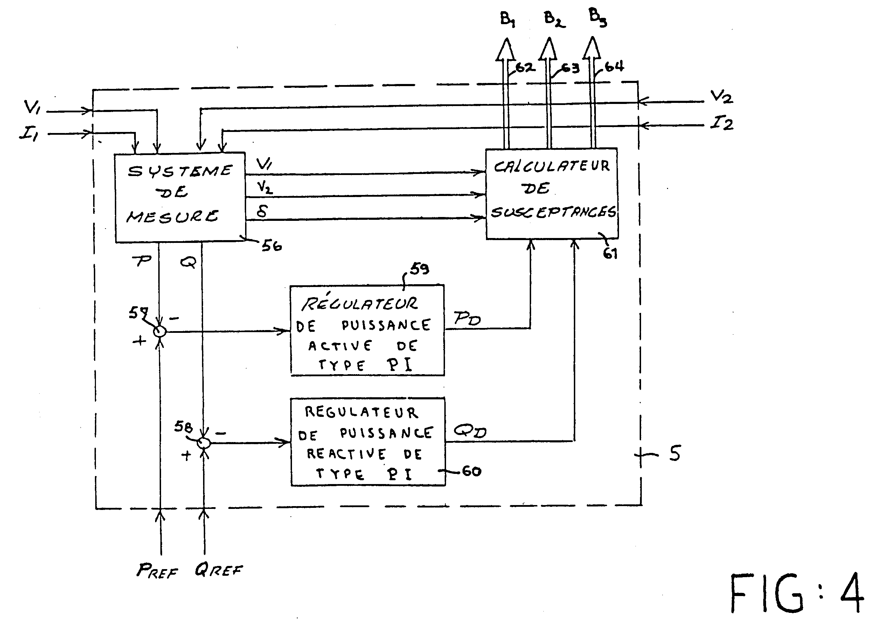

Le régulateur 5 permet de varier les impédances réactives variables monophasées 11, 12 et 13 en agissant sur les valves à thyristor 10. L'amplitude et la direction du transfert de puissance active est sélectionné par une entrée $P_{REF}$ du régulateur 5. De la même façon, on ajuste une entrée $Q_{REF}$ du régulateur 5 selon si l'on désire que le système d'interconnexion de la Figure 1 absorbe ou génère une certaine quantité de puissance réactive selon les besoins des réseaux 1 et 2 ou si l'on désire annuler les puissances réactives engagées dans le transfert de puissance active d'un des deux réseaux à l'autre. Le fonctionnement de ce régulateur sera explicité plus en détails ci-après avec référence à la Figure 4 des dessins.

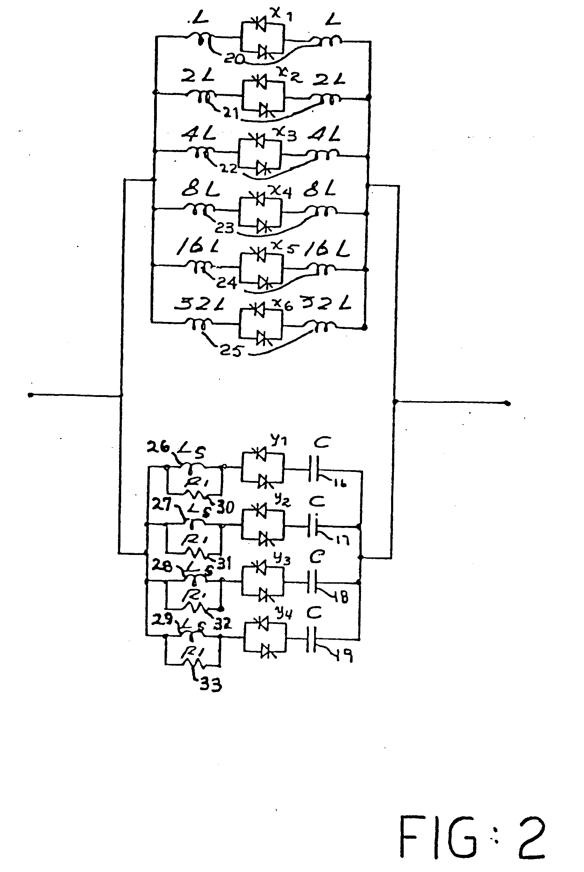

La Figure 2 illustre un exemple de réalisation de l'une des impédances réactives monophasées 11, 12 ou 13 de la Figure 1 commandées par des valves à thyristor. Chacune de ces impédances réactives monophasées est composée d'un banc d'inductances et d'un banc de condensateurs disposés en parallèle.

Le banc de condensateurs est composé d'une ou plusieurs unités ayant une même capacité et qui sont commandées au moyen de valves à thyristor bien qu'en principe une ou plusieurs de ces unités pourraient être branchées en permanence.

La réalisation illustrée à la Figure 2 comporte 4 unités 16 à 19 de même capacité C et commandées par des valves à thyristor $Y_1$ à $Y_4$. Une inductance 26 à 29 de valeur $L_s$ reliée en série avec chaque condensateur 16 à 19, respectivement, sert à limiter le taux de variation du courant lors d'un enclenchement de la valve à thyristor correspondante, et une résistance 30 à 33 de valeur $R_1$ reliée en parallèle avec chaque inductance 26 à 29, respectivement, sert à amortir les oscillations produites lors de l'enclenchement de la valve à thyristor correspondante. Une variation de susceptance du banc de condensateurs de zéro a une valeur maximale $B_m$, requise selon l'application prévue, peut donc s'effectuer en quatre étapes. L'expression (1) suivante permet de calculer la susceptance du banc de condensateurs en fonction de l'état ouvert ou fermé des quatre valves à thyristor $Y_1$ à $Y_4$.

$$B_C(Y) = B_m \sum_{i=1}^{4} Y_i \, 2^{-2} \qquad (1)$$

Dans cette expression, $B_m$ représente la valeur maximale de la susceptance du banc de condensateurs lorsque les quatre valves à thyristor sont fermées, et $B_c(Y)$ la valeur de la susceptance du banc de condensateurs en fonction de l'état ouvert ou fermé des quatre valves $Y_1$ à $Y_4$. $Y_i$, i variant de 1 à 4 pour représenter chaque valve à thyristor $Y_1$ à $Y_4$, est égal à 1 si la valve est fermée et à 0 si cette valve est ouverte.

La valeur C de chaque condensateur 16 à 19 peut être déterminée à l'aide de l'équation (2) suivante:

$$C = \frac{B_m}{4\omega} \cdot \left[ 1 - \left(\frac{\omega}{\omega_r}\right)^2 \right] \qquad (2)$$

$$\omega_r = \frac{1}{\sqrt{L_s C}} \quad , \quad R_1 \gg \omega L_s$$

où $\omega$ représente la vitesse angulaire d'un vecteur tournant à la fréquence du réseau et $\omega_r$ représente la vitesse angulaire d'un vecteur tournant à la fréquence de résonance du réseau formée par l'un des condensateurs 16 à 19 de valeur C et l'une des inductances 26 à 29 de valeur $L_s$.

Le banc d'inductances est composé de plusieurs unités reliées en parallèle, chacune étant commandée par une valve à thyristor associée. La réalisation présentée à la Figure 2 comporte un banc de six inductances 20 à 25 dont la valeur des susceptances respectives suit une progression géométrique allant de $\frac{1}{2L}$ à

$$\frac{1}{64L} \quad .$$

Plus particulièrement, la valeur de chaque inductance peut être déterminée par l'expression $L(n) = 2^n L$ où $L(n)$ est la valeur de chaque inductance, $L$ est une valeur d'inductance déterminée selon les besoins de l'application prévue et $n$ varie de 1 jusqu'au nombre total d'inductances qui dans ce cas-ci est égal à 6.

Un tel montage donne une possibilité de variation de la susceptance totale du banc d'inductances de zéro jusqu'à une valeur maximale $-(1-2^{-6})$ $B_m$ lorsque les six valves à thyristor $X_1$ à $X_6$ sont fermées, en passant par 64 étapes égales en fonction de l'état ouvert ou fermé de ces six valves à thyristor $X_1$ à $X_6$. L'expression (3) suivante donne la valeur de la susceptance du banc d'inductances 20 à 25 en fonction de l'état des valves $X_1$ à $X_6$.

$$B_L (X) = -B_m \sum_{k=1}^{6} X_k \, 2^{-k} \qquad (3)$$

Dans cette expression, $B_m$ est la valeur maximale définie plus haut, $B_L (X)$ représente la valeur de la susceptance du banc d'inductances en fonction de l'état ouvert ou fermé des valves à thyristor $X_1$ à $X_6$, et $X_k$, $k$ variant de 1 à 6 pour représenter chaque valve à thyristor $X_1$ à $X_6$, est égal à 1 lorsque la valve est fermée et à 0 si la valve est ouverte.

On peut calculer la valeur $L$ par l'équation (4):

$$L = \frac{1}{\omega B_m} \qquad (4)$$

où $\omega$ et $B_m$ ont été définis plus haut.

Dans la réalisation de la Figure 2 , chacune des six inductances 20 à 25 est divisée en deux parties, la valve à thyristor associée à chaque inductance étant disposée entre ces deux parties de sorte à assurer une meilleure protection des valves à thyristor et de l'équipement associé qui ont pour fonction de commander les inductances. En principe, une des inductances 20 à 25 pourrait éventuellement être contrôlée de manière presque continuelle au moyen d'un contrôle de la phase d'enclenchement de la valve à thyristor correspondante, pour assurer une variation douce de la susceptance, mais par contre une telle inductance serait génératrice d'harmoniques. Tel que démontré par les équations (1) et (3) ci-dessus, la variation de la réactance totale du banc de condensateurs et du banc d'inductances au moyen des valves à thyristor $Y_1$ à $Y_4$ et $X_1$ à $X_6$ peut s'effectuer à partir d'une susceptance minimale inductive $B_{min}$ égale à $-(1-2^{-6})$ $B_m$ jusqu'à une susceptance maximale capacitive $B_{max}$ égale à $B_m$.

Cette variation de la susceptance totale s'effectue de la susceptance minimale à la susceptance maximale en 128 étapes. Plus particulièrement, les condensateurs 16 à 19 et les inductances 20 et 21 sont utilisés pour réaliser une variation par grands paliers de la susceptance tandis que les inductances 22 à 25 sont utilisées pour réaliser une variation par 16 petits paliers de la susceptance entre chacune des grandes étapes ci-dessus mentionnées. Evidemment, les inductances 22 à 25 sont également utilisées pour augmenter la susceptance inductive au-delà de la susceptance donnée par les inductances 20 et 21.

Selon cette méthode d'interconnexion, l'une des susceptances $B_1$, $B_2$ ou $B_3$ de la Figure 1 est inductive tandis que les deux autres sont capacitives ou capacitive et nulle, ou encore l'une de ces susceptances est capacitive tandis que les deux autres sont inductives ou inductive et nulle.

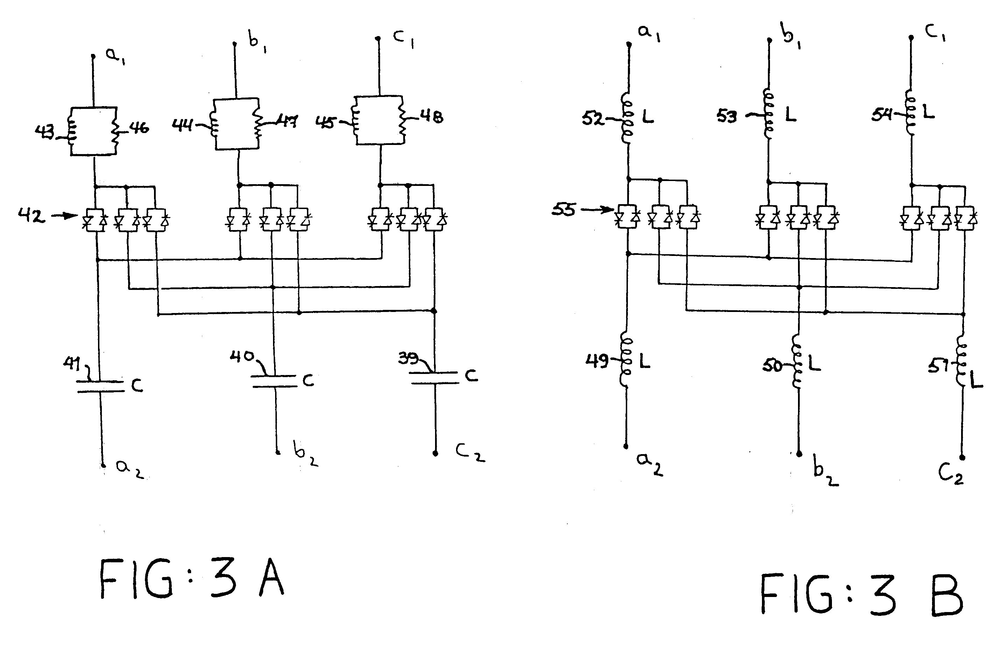

Cette constatation permet de réduire considérablement le nombre d'inductances et de condensateurs nécessaires à l'interconnexion des deux réseaux 1 et 2 en utilisant les montages illustrés aux Figures 3a et 3b.

6

Dans la réalisation illustrée à la Figure 3a, chaque condensateur 16 à 19 de la Figure 2 de toutes les impédances réactives monophasées 11, 12 et 13, peut être remplacé par les trois condensateurs 39 à 41 de même valeur C de la Figure 3a. Ce montage permet d'interconnecter chaque phase du réseau 1 avec chaque phase du réseau 2 à travers un des condensateurs 39 à 41 en contrôlant de façon appropriée les valves à thyristor 42 par l'intermédiaire du régulateur 5 de la Figure 1. Des inductances 43 à 45 et des résistances 46 à 48 ayant les mêmes fonctions que les inductances 26 à 29 et les résistances 30 à 33 de la Figure 2 sont également prévues dans un tel montage.

De la même façon, l'inductance 20 de la Figure 2 de toutes les impédances réactives variables monophasées 11, 12 et 13 peuvent être remplacées par les inductances 49 à 54 de valeur L qui sont commandées par les valves à thyristor 55 contrôlées par le régulateur 5 de la Figure 1. Il en est de même pour les inductances 21 à 25 de la Figure 2. Ainsi, chaque phase du réseau 1 peut être reliée avec chaque phase du réseau 2 à travers deux des inductances 49 à 54 en contrôlant de façon appropriée les valves à thyristor 55. Il est cependant à noter que en plus des montages tels qu'illustrés aux Figures 3a et 3b pour remplacer chacune des inductances et chacun des condensateurs illustrés à la Figure 2 de toutes les impédances réactives variables monophasées 11, 12 et 13, il faut prévoir quelques montages supplémentaires de certaines de ces inductances afin de pouvoir réaliser, à l'aide de tels montages toutes les possibilités, en fonction de l'angle de décalage $\delta$ entre les tensions des phases correspondantes des réseaux 1 et 2, des valeurs des susceptances $B_1$ à $B_3$ des liaisons définies en référence à la Figure 1.

Tel que déjà mentionné, une telle réalisation des impédances réactives variables triphasées permet de réduire considérablement le nombre d'inductances et de condensateurs nécessaires tout en réalisant exactement les mêmes objectifs. Cependant, le logiciel et la structure du régulateur 5 de la Figure 1 doivent être quelque peu modifiés puisque dans de tels montages, il y a plus de valves à thyristor à contrôler. Ces montages sont quand même avantageux du point de vue optimisation de l'équipement.

Il est important ici de noter que bien que les impédances réactives triphasées peuvent être réalisées selon les Figures 3a et 3b, les liaisons établies entre les trois phases des réseaux 1 et 2 telles que définies en référence à la Figure 1 doivent demeurer les mêmes. Les susceptances $B_1$, $B_2$ et $B_3$ de ces liaisons doivent également varier de la même façon en fonction de l'angle de décalage $\delta$.

Bien que l'exemple illustré par la Figure 1 s'applique pour un transfert de puissance active du réseau 1 vers le réseau 2, il faut garder à l'esprit que le même raisonnement s'applique pour un transfert de puissance du réseau 2 vers le réseau 1.

Le principe de fonctionnement du système d'interconnexion selon l'invention est le suivant.

Pour une susceptance maximale capacitive appliquée entre deux tensions décalées d'un angle $\delta$, l'impédance réactive d'interconnexion transporte une puissance active maximale tandis que pour une susceptance maximale inductive, l'impédance réactive d'interconnexion transporte la même puissance active mais en direction opposée. Une variation de la susceptance des impédances réactives variables permet donc de varier le niveau et la direction de la puissance active transférée par le système d'interconnexion d'un réseau vers l'autre. Ce transfert de puissance active est accompagné d'un engagement de puissance réactive (génération ou absorption de puissance réactive par les impédances réactives variables du système d'interconnexion). Ces puissances active et réactive dépendent à la fois de l'angle $\delta$ entre les tensions $V_1$ et $V_2$ ainsi que de l'amplitude de ces deux tensions.

Un transfert de puissance active peut donc être établi entre les deux réseaux 1 et 2 en choisissant des valeurs des impédances réactives d'interconnexion en tenant compte de la différence angulaire $\delta$ entre les réseaux 1 et 2 et de la valeur des tensions $V_1$ et $V_2$. Si l'interconnexion est réalisée au moyen d'inductances variables, le système d'interconnexion absorbera une puissance réactive qui devra être compensée extérieurement. Dans le cas d'une interconnexion au moyen de condensateurs variables le système d'interconnexion produira une puissance réactive. Lorsque les impédances réactives d'interconnexion sont composées d'inductances et de condensateurs tel que décrit précédemment, le transfert de puissance active d'un réseau à l'autre pourra s'effectuer de façon plus efficace puisque le système d'interconnexion peut dans ce cas réaliser une compensation interne de la puissance réactive engagée dans le transfert de puissance active.

Les puissances actives et réactives s'expriment au moyen des équations (5) et (6) suivantes:

$$P_i = B_i V_1 V_2 \sin \delta_i \qquad (5)$$

$$Q_i = B_i (V_1^2 + V_2^2 - 2V_1 V_2 \cos \delta_i) \qquad (6)$$
où $\delta_i = \delta - (i-1)\, 2\pi/3$
$i = 1, 2$ et $3$

7

Lorsque l'angle $\delta_i$ devient nul, la puissance active transférée $P_i$ tombe à une valeur nulle, mais il subsiste une puissance réactive engagée $Q_i$ si les tensions $V_1$ et $V_2$ sont de valeurs inégales. Pour un angle $\delta_i$ égal à $\pi$ radians, aucune puissance active $P_i$ n'est transférée, mais la puissance réactive engagée $Q_i$ est maximale. Cependant, lorsque l'on dispose de trois impédances réactives triphasées d'interconnexion établissant les liaisons de susceptances $B_1$, $B_2$ et $B_3$ et respectivement connectées aux bornes de tensions décalées d'un angle $\delta_1$, $\delta_2$ et $\delta_3$, ces trois angles étant eux-mêmes décalés de $\frac{2\pi}{3}$ radians l'un par rapport à l'autre, un transfert de puissance active est possible pour toute valeur de l'angle de décalage $\delta$ entre les tensions $V_1$ et $V_2$.

De plus, lorsque le système d'interconnexion est contrôlable par les trois variables $B_1$, $B_2$ et $B_3$ ou par deux variables lorsque l'un des angles $\delta_i$ est nul ou égal à $\pi$ radians, un transfert de puissance active désiré peut être établi au niveau désiré

$$P_1 \; + \; P_2 \; + \; P_3 \; = \; P_{REF}$$

au moyen du régulateur 5 de la Figure 1 qui peut en outre accomplir des tâches supplémentaires telles que la compensation interne de la puissance réactive interne engagée dans le transfert de puissance active, ou la génération ou l'absorption par l'intermédiaire des impédances réactives d'interconnexion, de puissance réactive pour les besoins des réseaux 1 et 2 soit:

$$Q_1 \; + \; Q_2 \; + \; Q_3 \; = \; Q_{REF}$$

Le régulateur 5 peut ainsi réaliser les tâches ci-dessus tout en minimisant la valeur absolue de la puissance réactive interne engagée du système d'interconnexion en même temps qu'il impose une minimisation du taux de variation des susceptances $B_1$, $B_2$ et $B_3$ pour les différentes valeurs angulaire $\delta$.

En principe, le régulateur 5 pourrait aussi effectuer d'autres tâches additionnelles comme, par exemple, la stabilisation de la valeur moyenne des tensions $V_1$ et $V_2$ des réseaux 1 et 2 au point d'interconnexion, c'est-à-dire qu'il servirait de compensateur statique de puissance réactive, et....

La structure du régulateur 5 de la Figure 1 dépend donc en général des fonctions de régulation aussi bien que des méthodes de synthèse utilisées pour réaliser ces fonctions de régulation.

Un exemple de réalisation du régulateur 5 de la Figure 1 est présenté en détail à la Figure 4.

Un système 56 mesure la puissance active triphasée P, réellement transférée par le système d'interconnexion, la valeur Q de la puissance réactive triphasée engagée dans le transfert de puissance active, et, pour chaque phase correspondante des premier et second réseaux, les amplitudes des tensions $V_1$ et $V_2$ et le décalage angulaire $\delta$ entre ces tensions $V_1$ et $V_2$, à partir de l'acquisition de ces tensions $V_1$ et $V_2$ provenant des phases correspondantes des deux réseaux et appliquées aux bornes des impédances réactives variables du système d'interconnexion et des courants $I_1$ et/ou $I_2$ définis avec référence à la Figure 1 et correspondant aux mêmes phases correspondantes des réseaux 1 et 2 que les tensions $V_1$ et $V_2$. Les écarts des puissances P et Q par rapport à des valeurs d'entrées de référence $P_{REF}$ et $Q_{REF}$ déterminés par deux circuits soustracteurs 57 et 58 sont traités au moyen de deux régulateurs 59 et 60 de type proportionnel intégral (P-I), dont les facteurs de proportionnalité sont réglés de façon optimale, pour déterminer des valeurs de puissance demandées $P_D$ et $Q_D$.

Un calculateur 61 calcule les susceptances $B_1$, $B_2$ et $B_3$, à partir des puissances demandées $P_D$ et $Q_D$ provenant respectivement des régulateurs de puissance active et réactive 59 et 60, ainsi que des valeurs de tension $V_1$ et $V_2$ et de la valeur de l'angle $\delta$ délivrées par le système de mesure 56 pour chaque phase correspondante des réseaux 1 et 2. En contrôlant l'allumage des valves à thyristor des impédances réactives variables triphasées du système d'interconnexion, par ses sorties 62 à 64, le calculateur 61 établit les liaisons ayant les susceptances $B_1$, $B_2$ et $B_3$.

Ce calcul s'effectue en minimisant le critère d'optimisation défini précédemment tout en respectant les valeurs de consigne $P_{REF}$ et $Q_{REF}$ pour le transfert de la puissance active d'un réseau vers l'autre et la production et/ou absorption de puissance réactive par le système d'interconnexion. A l'aide de boucles fermées, le régulateur 5 réagit à la différence entre les valeurs de consigne et les valeurs mesurées P et Q en amenant graduellement et de façon rapide les valeurs P et Q non conformes à ces consignes $P_{REF}$ et $Q_{REF}$ au niveau requis.

Un autre système non représenté à la Figure 4 se charge de synchroniser l'allumage des valves à thyristor des impédances réactives variables établissant les liaisons de susceptance $B_1$, $B_2$ et $B_3$ afin de réduire les composantes transitoires des courants dans les inductances et les condensateurs de ces impédances réactives variables lors de l'allumage. Pour y parvenir, la valve d'une inductance est allumée au passage par la valeur maximale de la tension appliquée aux bornes de cette valve, tandis que la valve d'un condensateur est allumée au moment où la valeur de la tension aux bornes de cette valve prend une valeur minimale compte tenu d'une composante résiduelle de tension dans les condensateurs.

Il doit également être mentionné que les transformateurs 3 et 4 pourraient être formés d'un appareillage capable d'appliquer aux bornes des impédances réactives triphasées du système d'interconnexion un système de tension polyphasé, à 6 phases, par exemple. Le système d'interconnexion comprendrait alors plusieurs systèmes d'impédances réactives triphasées capables d'interconnecter les trois phases des réseaux 1 et 2 par l'intermédiaire de liaisons ayant les susceptances $B_1$, $B_2$ et $B_3$ et reliant les trois phases des réseaux 1 et 2 de la même façon que celle décrite avec référence à la Figure 1 des dessins. Un tel montage aurait comme avantage de permettre l'utilisation d'un appareillage de plus faible capacité et, par le fait même de réduire les coûts du système d'interconnexion lui-même ainsi que la valeur absolue de la puissance réactive engagée.

Bien que la présente invention ait été décrite à l'aide d'un mode particulier de réalisation, certaines modifications peuvent être apportées, comme par exemple un changement dans le circuit ou un remplacement des composants décrits par de l'appareillage ayant les mêmes fonctions sans pour cela changer la nature de la présente invention.

La structure du mode de réalisation du système d'interconnexion tel que décrit précédemment peut évidemment être modifiée à volonté, à condition de respecter l'étendue des revendications ci-jointes, sans pour cela altérer ou modifier l'idée inventive qui a conduit à la présente invention.

## Revendications

**1.** Système pour l'interconnexion d'un premier et d'un second réseau électrique alternatif, asynchrone ou synchrone, et triphasé, fonctionnant à des tensions alternatives de fréquences égales ou voisines, chaque réseau comportant une première, une seconde et une troisième phase fonctionnant à la tension de ce réseau, la tension de chaque phase du premier réseau et la tension de la phase correspondante du second réseau étant décalées l'une par rapport à l'autre d'un angle constant ou variant dans le temps, un ensemble d'impédances réactives variables triphasées reliant entre eux les deux réseaux, les impédances réactives variables triphasées dudit ensemble étant commandées pour établir (a) trois premières liaisons ayant chacune une première susceptance (11) entre les premières, secondes et troisièmes phases des premier et second réseaux, respectivement, (b) trois secondes liaisons ayant chacune une seconde susceptance (12), respectivement entre la première phase du premier réseau et la troisième phase du second réseau, entre la seconde phase du premier réseau et la première phase du second réseau, et entre la troisième phase du premier réseau et la seconde phase du second réseau et (c) trois troisièmes liaisons ayant chacune une troisième susceptance (13), respectivement entre la première phase du premier réseau et la seconde phase du second réseau, entre la seconde phase du premier réseau et la troisième phase du second réseau, et entre la troisième phase du premier réseau et la première phase du second réseau, lesdites première, seconde et troisième susceptances (11, 12 et 13) desdites premières, secondes et troisièmes liaisons variant avec les impédances réactives variables triphasées dudit ensemble, caractérisé en ce qu'à travers l'ensemble d'impédances est réalisé un transfert de puissance active désiré d'un des premier et second réseaux à l'autre de ces réseaux, lesdites impédances réactives variables comprenant des condensateurs variables et des inductances variables, et en ce que le système comprend des moyens de régulation (5) pour mesurer des paramètres électriques associés à au moins une phase correspondante des premier et second réseaux, lesdits paramètres électriques comprenant le courant qui circule dans ladite phase entre ledit premier réseau et ledit système, le courant qui circule dans ladite phase entre ledit second réseau et ledit système, la tension de ladite phase appliquée audit système du côté dudit premier réseau, et la tension de ladite phase appliquée audit système du côté du second réseau, lesdits moyens de régulation servant également à commander les impédances variables triphasées de façon à ce que lesdits paramètres électriques mesurés représentent un transfert de puissance active qui corresponde audit transfert de puissance active désiré d'un des premier et second réseaux à l'autre de ces réseaux, tout en maintenant à un niveau désiré une puissance réactive supportée par ledit système.

**2.** Système d'interconnexion selon la revendication 1, caractérisé en ce que lesdits moyens de régulation (5) incluent des moyens pour commander les impédances réactives variables triphasées dudit ensemble en fonction des paramètres électriques mesurés de façon à annuler la puissance réactive engagée dans ledit transfert de puissance active désiré, ou de façon à ce que ledit ensemble génère ou absorbe une certaine quantité de puissance réactive selon les besoins des premier et second réseaux.

3. Système d'interconnexion selon la revendication 1, caractérisé en ce que ledit ensemble d'impédances réactives variables comporte trois impédances réactives variables triphasées comprenant respectivement trois premières, trois secondes et trois troisièmes impédances réactives variables monophasées (11, 12 et 13), les premières impédances variables monophasées (11) établissant respectivement les trois premières liaisons ayant la première susceptance, les secondes impédances variables monophasées (12) établissant respectivement les trois secondes liaisons ayant la seconde susceptance, et les troisièmes impédances variables monophasées (13) établissant respectivement les trois troisièmes liaisons ayant la troisième susceptance.

4. Système d'interconnexion selon la revendication 1, caractérisé en ce que chaque impédance réactive variable triphasée comporte trois impédances réactives variables monophasées (11, 12 et 13) comprenant chacune un banc d'inductances (20 à 25) et de condensateurs (16 à 19) de valeurs fixes reliés en parallèle ainsi que des moyens de commutation (X1 à Y6 et Y1 à Y4), chaque condensateur (16 à 19) et chaque inductance (20 à 25) étant commandé par les moyens de régulation (5) par l'intermédiaire de ces moyens de commutation (X1 à X6 et Y1 à Y4).

5. Système d'interconnexion selon la revendication 4, caractérisé en ce que les moyens de commutation (X1 à X6 et Y1 à Y4) de chaque impédance variable monophasée (11, 12 et 13) comprennent une valve à thyristor (X1 à X6 et Y1 à Y4) pour chaque inductance (20 à 25) et chaque condensateur (16 à 19).

6. Système d'interconnexion selon la revendication 5, caractérisé en ce que chaque inductance (20 à 25) est formée d'une première et d'une seconde inductances de même valeur reliées en série, la valve à thyristor (X1 à X6) associée à ladite inductance (20 à 25) étant montée en série avec et entre lesdites premières et secondes inductances de même valeur formant cette inductance.

7. Système d'interconnexion selon la revendication 5, caractérisé en ce que, dans chaque impédance réactive variable monophasée (11, 12 et 13), chaque condensateur (16 à 19) est relié en série avec une inductance (26 à 29) montée en parallèle avec une résistance (30 à 33), la valve à thyristor (Y1 à Y4) associée audit condensateur (16 à 19) étant disposée en série avec et entre le condensateur (16 à 19) et ladite inductance (26 à 29) montée en parallèle avec la résistance (30 à 33).

8. Système d'interconnexion selon la revendication 4, caractérisé en ce que les valeurs des inductances (20 à 25) de chaque impédance réactive variable monophasée (11, 12 et 13) sont déterminées par l'expression $L(n) = 2^n L$ où $L(n)$ est la valeur de chaque inductance (20 à 25), L est une valeur prédéterminée d'inductance et n varie de 1 à x, x étant le nombre total d'inductances de chaque impédance réactive variable.

9. Système d'interconnexion selon la revendication 4, caractérisé en ce que les condensateurs (16 à 19) de chaque impédance réactive variable monophasée (11, 12 et 13) ont tous une même valeur.

10. Système d'interconnexion selon la revendication 1, caractérisé en ce que chaque impédance réactive variable triphasée comprend un groupe de condensateurs (39, 40, 41) ou d'inductances (49 à 54) de valeurs fixes, et des moyens de commutation (42 ou 55), ledit groupe étant monté de façon à pouvoir relier entre elles chaque phase du premier réseau avec chaque phase du second réseau, et étant commandé par lesdits moyens de régulation (5) par l'intermédiaire de ces moyens de commutation (42 ou 55).

11. Système d'interconnexion selon la revendication 10, caractérisé en ce que lesdits moyens de commutation (42 ou 55) dudit groupe comprennent une pluralité de valves à thyristor (42 ou 55).

12. Système d'interconnextion selon la revendication 10, caractérisé en ce que le groupe d'inductances (49 à 54) comporte trois premières inductances (52 à 54) et trois secondes inductances (49 à 51) comprenant chacune une première et une seconde bornes, les trois premières inductances (5 2 à 54) étant reliées par leurs premières bornes aux trois phases du premier réseau, respectivement, et les trois secondes inductances (49 à 51) étant reliées par leurs premières bornes aux trois phases du second réseau, respectivement, les moyens de commutation (55) dudit groupe étant disposés de façon à pouvoir interconnecter les secondes bornes des trois premières inductances (52 à 54) avec les secondes bornes des trois secondes inductances (49 à 51) pour permettre d'établir, entre chaque phase du premier réseau et chaque phase du second réseau, une liaison à travers une des premières (52 à 54) et une des secondes inductances (49 à 51).

**13.** Système d'interconnexion selon la revendication 12, caractérisé en ce que les trois premières et trois secondes inductances (49 à 54) ont toutes une même valeur.

**14.** Système d'interconnexion selon la revendication 10, caractérisé en ce que le groupe de condensateurs (39 à 41) comprend trois condensateurs (39 à 41) comportant chacun une première et une seconde bornes, les premières bornes des trois condensateurs (39 à 41) dudit groupe étant reliées respectivement aux trois phases de l'un des premier et second réseaux, et les secondes bornes de ces trois condensateurs (39 à 41) à l'autre des premier et second réseaux à travers les moyens de commutation (42) dudit groupe, lesdits moyens de commutation (42) étant disposés de façon à pouvoir interconnecter les secondes bornes des trois condensateurs (39 à 41) aux trois phases dudit autre réseau pour permettre d'établir, entre chaque phase du premier réseau et chaque phase de second réseau, une liaison à travers un desdits trois condensateurs (39 à 41).

**15.** Système d'interconnexion selon la revendication 14, caractérisé en ce que les condensateurs (39 à 41) dudit groupe de condensateurs ont tous une même valeur.

**16.** Système d'interconnexion selon la revendication 14, caractérisé en ce que les moyens de commutation (42) dudit groupe sont reliées aux trois phases dudit autre réseau respectivement par l'intermédiaire de trois impédances formées chacune par une inductance (43 à 45) reliée en parallèle avec une résistance (46 à 48).

**17.** Système d'interconnexion selon la revendication 1, caractérisé en ce que les paramètres électriques mesurés comprennent trois premières et trois secondes tensions appliquées audit ensemble et provenant des phases du premier et du second réseaux, respectivement, et trois premiers et trois seconds courants entrant ou sortant dudit ensemble et correspondant auxdites phases du premier et du second réseaux, respectivement, lesdits moyens de régulation (5) comprenant un système de mesure (56) pour mesurer les premières et secondes tensions et les premiers et seconds courants, et pour produire à partir de ces tensions et courants mesurés, des signaux de sortie représentatifs des premières tensions mesurées, des secondes tensions mesurées, d'un angle de décalage, pour chaque phase correspondante des premier et second réseaux, entre la première et la seconde tensions mesurées de cette phase correspondante, d'un transfert actuel de puissance active à travers ledit ensemble d'un des premier et second réseaux à l'autre de ces réseaux, et d'une mesure de puissance réactive engagée dans ce transfert actuel de puissance active.

**18.** Système d'interconnexion selon la revendication 17, caractérisé en ce que les moyens de régulation (5) comprennent une première entrée (PREF) à laquelle est appliquée une première valeur de référence représentative du transfert de puissance active désiré d'un des premier et second réseaux à l'autre de ces réseaux, une seconde entrée (QREF) à laquelle est appliquée une seconde valeur de référence représentative du niveau désiré de la puissance réactive engagée dans le transfert de puissance active désiré, et un dispositif (57 à 60) pour produire un signal de puissance active demandée et un signal de puissance réactive demandée, à partir de la première et la seconde valeurs de référence et à partir des signaux de sortie représentatifs du transfert actuel de puissance active à travers ledit ensemble, et de la mesure de la puissance réactive engagée dans ce transfert actuel de puissance active.

**19.** Système d'interconnexion selon la revendication 18, caractérisé en ce que ledit dispositif de production (57 à 60) comporte un premier circuit soustracteur (57) et un régulateur de puissance active du type proportionnel-intégral (59), le premier circuit soustracteur (57) effectuant une différence entre la première valeur de référence et le signal de sortie représentatif du transfert actuel de puissance active et délivrant un signal représentatif de cette différence au régulateur de puissance active (59) qui délivre le signal de puissance active demandée, ledit dispositif de production (57 à 60) comportant également un second circuit soustracteur (58) et un régulateur de puissance réactive du type proportionnel-intégral (60), le second circuit soustracteur (58) effectuant une différence entre la seconde valeur de référence et le signal de sortie représentatif de la mesure de la puissance réactive engagée dans le transfert actuel de puissance active et délivrant un signal représentatif de cette différence au régulateur de

EP 0 129 492 B1

puissance réactive (60) qui délivre le signal de puissance réactive demandée.

**20.** Système d'interconnexion selon la revendication 18, caractérisé en ce que les moyens de régulation (5) comportent un sous-système (61) pour calculer des valeurs à donner aux première, seconde et troisième susceptances (11, 12 et 13) desdites premières, secondes et troisièmes liaisons à partir desdits signaux de sortie représentatifs des premières tensions mesurées, des secondes tensions mesurées, des angles de décalage entre les premières et les secondes tensions mesurées, et à partir du signal de puissance active demandée et du signal de puissance réactive demandée, et pour modifier les impédances réactives variables dudit ensemble afin de donner ces valeurs aux première, seconde et troisième susceptances (11, 12 et 13) desdites liaisons afin d'établir ledit transfert de puissance active désiré à travers ledit ensemble d'un des premier et second réseaux à l'autre de ces réseaux et de maintenir au niveau désiré la puissance réactive engagée dans ledit transfert de puissance active désiré.

**21.** Système d'interconnexion selon la revendication 20, caractérisé en ce que ledit ensemble comprend une pluralité de valves à thyristor (10) permettant aux moyens de régulation (5) de commander les impédances réactives variables dudit ensemble, lesdits moyens de régulation (5) comprenant des moyens de synchronisation coopérant avec ledit sous-système (61) pour allumer les valves à thyristor (10) de façon à réduire les composantes transitoires de courants dans les impédances réactives variables lors de l'allumage desdites valves à thyristor.

**22.** Système d'interconnexion selon la revendication 1, caractérisé en ce que les trois phases d'au moins un des premier et second réseaux sont reliées audit ensemble par l'intermédiaire d'un transformateur (3 et 4).

**23.** Système d'interconnexion selon la revendication 22, caractérisé en ce que le transformateur (3 et 4) comprend trois enroulements primaires et trois enroulements secondaires, les trois enroulements primaires de ce transformateur (3 et 4) étant connectés aux trois phases du réseau correspondant et reliés en étoile avec neutre à la masse, et les trois enroulements secondaires de ce transformateur (3 et 4) étant connectés audit ensemble et reliés en delta.

**24.** Système d'interconnexion selon la revendication 1, caractérisé en ce qu'au moins un des premier et second réseaux est relié audit ensemble par l'intermédiaire d'un transformateur (3 et 4), ce transformateur (3 et 4) comprenant des enroulements primaires reliés aux trois phases de ce réseau, le transformateur (3 et 4) comprenant également des enroulements secondaires reliés audit ensemble et coopérant avec les enroulements primaires pour produire, à partir des trois phases de ce réseau, un système de tensions polyphasées appliquées audit ensemble.

**25.** Système d'interconnexion selon la revendication 1, caractérisé en ce que lesdits moyens de régulation (5) comportent des moyens pour commander, lorsque des oscillations surviennent sur au moins l'un des premier et second réseaux et en fonction des paramètres électriques mesurés, les impédances réactives variables triphasés dudit ensemble de façon à établir à travers ledit ensemble un transfert de puissance active modulé d'un des premier et second réseaux à l'autre de ces réseaux à des fins d'amortissement desdites oscillations, ce transfert de puissance active modulé constituant alors ledit transfert de puissance active désiré.

**26.** Méthode pour interconnecter un premier et un second réseau électrique alternatif, asynchrone ou synchrone, et triphasé, fonctionnant à des tensions alternatives de fréquences égales ou voisines, chaque réseau comportant une première, une seconde et une troisième phase fonctionnant à la tension de ce réseau, la tension de chaque phase du premier réseau et la tension de la phase correspondante du second réseau étant décalées l'une par rapport à l'autre d'un angle constant ou variant dans le temps, un ensemble d'impédances réactives variables triphasées reliant entre eux les deux réseaux, (a) trois premières liaisons ayant chacune une première susceptance (11), respectivement entre les premières, secondes et troisièmes phases des premier et second réseaux, (b) trois secondes liaisons ayant chacune une seconde susceptance (12), respectivement entre la première phase du premier réseau et la troisième phase du second réseau, entre la seconde phase du premier réseau et la première phase du second réseau, et entre la troisième phase du premier réseau et la seconde phase du second réseau, et, (c) trois troisièmes liaisons ayant chacune une troisième susceptance (13),

12

respectivement entre la première phase du premier réseau et la seconde phase du second réseau, entre la seconde phase du premier réseau et la troisième phase du second réseau, et entre la troisième phase du premier réseau et la première phase du second réseau, lesdites première, seconde et troisième susceptances (11,12 et 13) desdites premières, secondes et troisièmes liaisons variant avec les impédances réactives triphasées dudit ensemble, ladite méthode étant caractérisée en ce que :

on établit, à travers l'ensemble d'impédances, un transfert de puissance active désiré d'un des premier et second réseaux à l'autre de ces réseaux, lesdites impédances réactives comprenant des condensateurs variables et des inductances variables ;

on mesure des paramètres électriques associés à au moins une phase correspondante des premier et second réseaux, lesdits paramètres électriques comprenant le courant qui circule dans ladite phase entre ledit premier réseau et ledit système, le courant qui circule dans ladite phase entre ledit second réseau et ledit système, la tension de ladite phase appliquée audit système du côté du premier réseau, et la tension de ladite phase appliquée audit système du côté du second réseau, et

on commande des impédances réactives variables triphasées de façon à ce que lesdits paramètres électriques mesurés représentent un transfert de puissance active qui corresponde audit transfert de puissance active désiré d'un des premier et second réseaux à l'autre de ces réseaux, tout en maintenant à un niveau désiré une puissance réactive supportée par ledit système.

27. Méthode d'interconnexion selon la revendication 26, caractérisée en ce que l'on commande les impédances réactives variables triphasées dudit ensemble en fonction des paramètres électriques mesurés de façon à annuler la puissance réactive engagée dans ledit transfert de puissance active désiré, ou de façon à ce que ledit ensemble absorbe ou génère une certaine quantité de puissance réactive selon les besoins des premier et second réseaux.

28. Méthode d'interconnexion selon la revendication 26, caractérisée en ce que les paramètres électriques mesurés comprennent, pour chaque phase correspondante des premier et second réseaux, une première et une seconde tensions appliquées audit ensemble et provenant de cette phase correspondante du premier et du second réseaux, respectivement, et un premier et un second courants entrant ou sortant dudit ensemble et correspondant également à cette phase correspondante du premier et du second réseaux, respectivement.

29. Méthode d'interconnexion selon la revendication 26, caractérisée en ce que l'on commande les impédances réactives variables dudit ensemble également en fonction d'une première valeur de référence représentative du transfert de puissance active désiré d'un des premier et second réseaux vers l'autre de ces réseaux, et d'une seconde valeur de référence représentative du niveau désiré de la puissance réactive engagée dans le transfert de puissance active désiré.

30. Méthode d'interconnexion selon la revendication 26, caractérisée en ce que l'on relie les trois phases d'au moins un des premier et second réseaux audit ensemble par l'intermédiaire d'un transformateur (3 et 4).

31. Méthode d'interconnexion selon la revendication 30, caractérisée en ce que l'on produit, à l'aide dudit transformateur (3 et 4) et à partir des trois phases du réseau associé à ce transformateur (3 et 4), un système de tensions polyphasées qui est appliqué audit ensemble d'impédances réactives variables.

32. Méthode d'interconnexion Selon la revendication 26, caractérisée en ce que lesdites impédances réactives variables triphasées dudit ensemble sont commandées, lorsque surviennent des oscillations sur au moins l'un des premier et second réseaux, en fonction desdits paramètres électriques mesurés de façon à établir à travers ledit ensemble un transfert de puissance active modulé d'un des premier et second réseaux à l'autre de ces réseaux pour fins d'amortissement desdites oscillations, ce transfert de puissance active modulé constituant alors ledit transfert de puissance active désiré.

## Claims

1. System for interconnecting first and second asynchronous or synchronous three-phase AC electrical networks, operating at AC voltages with equal frequencies or ones which are close to each other, each network having a first, second and third phase operating at the voltage of this network, the voltage of each phase in the first network and the voltage of the corresponding phase in the second network being offset with respect to each other by an angle which is constant or varying over time, a set of three-phase variable reactive impedances connecting the two networks to each other, the three-phase variable reactive impedances of the said set being controlled so as to establish (a) three first connections each having a first susceptance (11) respectively between the first, second and third phases of the first and second systems, (b) three second connections each having a second susceptance (12) respectively between the first phase of the first network and the third phase of the second network, between the second phase of the first network and the first phase of the second network and between the third phase of the first network and the second phase of the second network and (c) three third connections each having a third susceptance (13) respectively between the first phase of the first network and the second phase of the second network, between the second phase of the first network and the third phase of the second network and between the third phase of the first network and the first phase of the second network, the said first, second and third susceptances (11, 12 and 13) of the said first, second and third connections varying with the three-phase variable reactive impedances of the said set, characterised in that, through the set of impedances, a desired active power transfer is effected from one of the first and second networks to the other one of these networks, the said variable reactive impedances comprising variable capacitors and variable inductors, and in that the system comprises regulation means (5) for measuring electrical parameters associated with at least one corresponding phase of the first and second networks, the said electrical parameters comprising the current which is flowing in the said phase between the said first network and the said system, the current which is flowing in the said phase between the said second network and the said system, the voltage of the said phase applied to the said system on the said first network side, and the voltage of the said phase applied to the said system on the second network side, the said regulation means also serving to control the three-phase variable impedances so that the said electrical parameters measured represent an active power transfer which corresponds to the said desired active power transfer from one of the first or second networks to the other one of these networks, whilst maintaining a reactive power supported by the said system at a desired level.

2. System of interconnection according to Claim 1, characterised in that the said regulation means (5) include means for controlling the three-phase variable reactive impedances of the said set as a function of the electrical parameters measured so as to cancel out the reactive power incurred in the said desired active power transfer, or so that the said set generates or absorbs a certain quantity of reactive power according to the needs of the first and second networks.

3. System of interconnection according to Claim 1, characterised in that the said set of variable reactive impedances includes three three-phase variable reactive impedances comprising respectively three first, three second and three third single-phase variable reactive impedances (11, 12 and 13), the first single-phase variable impedances (11) establishing respectively the three first connections having the first susceptance, the second single-phase variable impedances (12) establishing respectively the three second connections having the second susceptance, and the third single-phase variable impedances (13) establishing respectively the three third connections having the third susceptance.

4. System of interconnection according to Claim 1, characterised in that each three-phase variable reactive impedance has three single-phase variable reactive impedances (11, 12 and 13) each comprising a bank of inductances (20 to 25) and capacitors (16 to 19) with fixed values connected in parallel and switching means (X1 to X6 and Y1 to Y4), each capacitor (16 to 19) and each inductance (20 to 25) being controlled by the regulation means (5) through these switching means (X1 to X6 and Y1 to Y4).

5. System of interconnection according to Claim 4, characterised in that the switching means (X1 to X6 and Y1 to Y4) of each single-phase variable impedance (11, 12 and 13) comprise a thyristor valve (X1 to X6 and Y1 to Y4) for each inductance (20 to 25) and each capacitor (16 to 19).

6. System of interconnection according to Claim 5, characterised in that each inductance (20 to 25) is formed by first and second inductances with the same value connected in series, the thyristor valve (X1 to X6) associated with the said inductance (20 to 25) being mounted in series with and between the said first and second inductances with the same value forming this inductance.

14

**7.** System of interconnection according to Claim 5, characterised in that, in each single-phase variable reactive impedance (11, 12 and 13), each capacitor (16 to 19) is connected in series with an inductance (26 to 29) mounted in parallel with a resistor (30 to 33), the thyristor valve (Y1 to Y4) associated with the said capacitor (16 to 19) being disposed in series with and between the capacitor (16 to 19) and the said inductance (26 to 29) mounted in parallel with the resistor (30 to 33).

**8.** System of interconnection according to Claim 4, characterised in that the values of the inductances (20 to 25) of each single-phase variable reactive impedance (11, 12 and 13) are determined by the expression $L(n) = 2^n L$ where $L(n)$ is the value of each inductance (20 to 25), L is a predetermined inductance value and n varies from 1 to x, x being the total number of inductances in each variable reactive impedance.

**9.** System of interconnection according to Claim 4, characterised in that the capacitors (16 to 19) of each single-phase variable reactive impedance (11, 12 and 13) all have the same value.

**10.** System of interconnection according to Claim 1, characterised in that each three-phase variable reactive impedance comprises a group of capacitors (39, 40, 41) or inductances (49 to 54) with fixed values, and switching means (42 or 55), the said group being mounted so as to be able to connect to each other each phase of the first network with each phase of the second network, and being controlled by the said regulation means (5) through these switching means (42 or 55).

**11.** System of interconnection according to Claim 10, characterised in that the said switching means (42 or 55) for the said group comprise a plurality of thyristor valves (42 or 55).

**12.** System of interconnection according to Claim 10, characterised in that the group of inductances (49 to 54) includes three first inductances (52 to 54) and three second inductances (49 to 51) each comprising first and second terminals, the three first inductances (52 to 54) being connected by their first terminals to the three phases respectively of the first network, and the three second inductances (49 to 51) being connected by their first terminals to the three phases respectively of the second network, the switching means (55) for the said group being disposed so as to be able to interconnect the second terminals of the three first inductances (52 to 54) with the second terminals of the three second inductances (49 to 51) so as to make it possible to establish, between each phase of the first network and each phase of the second network, a connection through one of the first inductances (52 to 54) and one of the second inductances (49 to 51).

**13.** System of interconnection according to Claim 12, characterised in that the three first and three second inductances (49 to 54) all have the same value.

**14.** System of interconnection according to Claim 10, characterised in that the group of capacitors (39 to 41) comprises three capacitors (39 to 41) each having first and second terminals, the first terminals of the three capacitors (39 to 41) of the said group being connected respectively to the three phases of one of the first and second networks, and the second terminals of these three capacitors (39 to 41) to the other one of the first and second networks through the switching means (42) for the said group, the said switching means (42) being disposed so as to be able to interconnect the second terminals of the three capacitors (39 to 41) to the three phases of the said other network so as to make it possible to establish, between each phase of the first network and each phase of the second network, a connection through one of the said three capacitors (39 to 41).

**15.** System of interconnection according to Claim 14, characterised in that the capacitors (39 to 41) of the said group of capacitors all have the same value.

**16.** System of interconnection according to Claim 14, characterised in that the switching means (42) for the said group are connected to the three phases respectively of the said other networks by means of three impedances each formed by an inductance (43 to 45) connected in parallel with a resistor (46 to 48).

**17.** System of interconnection according to Claim 1, characterised in that the electrical parameters measured comprise three first and three second voltages applied to the said set and originating from the phases of the first and second networks respectively, and three first and three second currents entering or leaving the said set and corresponding to the said phases of the first and second networks respectively, the said regulation means (5) comprising a measurement system (56) for measuring the first and second voltages and the first and second currents, and for producing, from these voltages and currents measured, output signals representing the first voltages measured, the second voltages measured, a phase difference angle, for each corresponding phase of the first and second networks, between the first and second measured voltages of this corresponding phase, an actual transfer of active power through the said set from one of the first and second networks to the other one of these networks, and a measurement of reactive power engaged in this concurrent transfer of active power.

18. System of interconnection according to Claim 17, characterised in that the regulation means (5) comprise a first input (PREF) to which is applied a first reference value representing the desired active power transfer from one of the first and second networks to the other one of these networks, a second input (QREF) to which is applied a second reference value representing the desired level of the reactive power engaged in the desired active power transfer, and a device (57 to 60) for producing an active power signal required and a reactive power signal required, from the first and second reference values and from the output signals representing the actual transfer of active power through the said set, and from the measurement of the reactive power engaged in this actual transfer of active power.

19. System of interconnection according to Claim 18, characterised in that the said production device (57 to 60) has a first subtraction circuit (57) and an active power regulator of the proportional-integral type (59), the first subtraction circuit (57) effecting a difference between the first reference value and the output signal representing the actual transfer of active power and delivering a signal representing this difference to the active power regulator (59) which delivers the required active power signal, the said production device (57 to 60) also having a second subtraction circuit (58) and a reactive power regulator of the proportional-integral type (60), the second subtraction circuit (58) effecting a difference between the second reference value and the output signal representing the measurement of the reactive power engaged in the actual transfer of active power and delivering a signal representing this difference to the reactive power regulator (60) which delivers the required reactive power signal.

20. System of interconnection according to Claim 18, characterised in that the regulation means (5) include a subsystem (61) for calculating the values to be given to the first, second and third susceptances (11, 12 and 13) of the said first, second and third connections from the said output signals representing the first voltages measured, the second voltages measured and the phase difference angles between the first and second voltages measured, and from the required active power signal and the required reactive power signal, and for modifying the variable reactive impedances of the said set in order to give these values to the first, second and third susceptances (11, 12 and 13) of the said connections in order to establish the said desired active power transfer through the said set from one of the first and second networks to the other one of these networks and to maintain at the desired level the reactive power engaged in the said desired active power transfer.

21. System of interconnection according to Claim 20, characterised in that the said set comprises a plurality of thyristor valves (10) enabling the regulation means (5) to control the variable reactive impedances of the said set, the said regulation means (5) comprising synchronisation means cooperating with the said subsystem (61) to switch on the thyristor valves (10) so as to reduce the transient current components in the variable reactive impedances when the said thyristor valves are switched on.

22. System of interconnection according to Claim 1, characterised in that the three phases of at least one of the first and second networks are connected to the said set through a transformer (3 and 4).

23. System of interconnection according to Claim 22, characterised in that the transformer (3 and 4) comprises three primary windings and three secondary windings, the three primary windings of this transformer (3 and 4) being connected to the three phases of the corresponding network and star-connected with neutral to earth, and the three secondary windings of this transformer (3 and 4) being connected to the said set and delta-connected.

24. System of interconnection according to Claim 1, characterised in that at least one of the first and second networks is connected to the said set through a transformer (3 and 4), this transformer (3 and 4) comprising primary windings connected to the three phases of this network, the transformer (3 and 4) also comprising secondary windings connected to the said set and cooperating with the primary windings to produce, from the three phases of this network, a system of multiphase voltages applied to the said set.

**25.** System of interconnection according to Claim 1, characterised in that the said regulation means (5) include means for controlling, when oscillations occur on at least one of the first and second networks and as a function of the electrical parameters measured, the three-phase variable reactive impedances of the said set so as to establish, through the said set, a modulated active power transfer from one of the first and second networks to the other one of these networks for the purpose of damping the said oscillations, this modulated active power transfer then constituting the said desired active power transfer.

**26.** Method for interconnecting first and second asynchronous or synchronous three-phase AC electrical networks, operating at AC voltages with equal frequencies or ones which are close to each other, each network having a first, second and third phase operating at the voltage of this system, the voltage of each phase in the first network and the voltage of the corresponding phase in the second network being offset with respect to each other by an angle which is constant or varying over time, a set of three-phase variable reactive impedances connecting the two networks to each other, (a) three first connections each having a first susceptance (11) respectively between the first, second and third phases of the first and second networks, (b) three second connections each having a second susceptance (12) respectively between the first phase of the first network and the third phase of the second network, between the second phase of the first network and the first phase of the second network and between the third phase of the first network and the second phase of the second network and (c) three third connections each having a third susceptance (13) respectively between the first phase of the first network and the second phase of the second network, between the second phase of the first network and the third phase of the second network and between the third phase of the first network and the first phase of the second network, the said first, second and third susceptances (11, 12 and 13) of the said first, second and third connections varying with the three-phase reactive impedances of the said set, the said method being characterised in that:

a desired active power transfer is established, through the set of impedances, from one of the first and second networks to the other one of these networks, the said reactive impedances comprising variable capacitors and variable inductances;

the electrical parameters associated with at least one corresponding phase of the first and second networks are measured, the said electrical parameters comprising the current circulating in the said phase between the said first network and the said system, the current passing in the said phase between the said second network and the said system, the voltage of the said phase applied to the said system on the first network side, and the voltage of the said phase applied to the said system on the second network side, and

three-phase variable reactive impedances are controlled so that the said electrical parameters measured represent an active power transfer which corresponds to the said desired active power transfer from one of the first and second networks to the other one of these networks, whilst maintaining at a desired level a reactive power supported by the said system.

**27.** Method of interconnection according to Claim 26, characterised in that the three-phase variable reactive impedances of the said set are controlled as a function of the electrical parameters measured so as to cancel out the reactive power engaged in the said desired active power transfer, or so that the said set absorbs or generates a certain quantity of reactive power according to the requirements of the first and second networks.

**28.** Method of interconnection according to Claim 26, characterised in that the electrical parameters measured comprise, for each corresponding phase of the first and second networks, first and second voltages applied to the said set and originating from this corresponding phase of the first and second networks respectively, and first and second currents entering or leaving the said set and also corresponding to this corresponding phase of the first and second networks respectively.

**29.** Method of interconnection according to Claim 26, characterised in that the variable reactive impedances of the said set are controlled, also as a function of a first reference value representing the desired active power transfer from one of the first and second networks to the other one of these networks, and a second reference value representing the desired level of the reactive power engaged in the desired active power transfer.

30. Method of interconnection according to Claim 26, characterised in that the three phases of at least one of the first and second networks are connected to the said set through a transformer (3 and 4).

31. Method of interconnection according to Claim 30, characterised in that a system of multiphase voltages which is applied to the said set of variable reactive impedances is produced by means of the said transformer (3 and 4) and from the three phases of the network associated with this transformer (3 and 4).

32. Method of interconnection according to Claim 26, characterised in that the said three-phase variable reactive impedances of the said set are controlled, when oscillations occur on at least one of the first and second networks, as a function of the said electrical parameters measured so as to establish, through the said set, a modulated active power transfer from one of the first and second networks to the other one of these networks for the purpose of damping the said oscillations, this modulated active power transfer then constituting the said desired active power transfer.

**Patentansprüche**

1. System zum Verbinden eines ersten und eines zweiten asynchronischen oder synchronischen und dreiphasigen elektrischen Wechselstromnetzes, die mit Wechselspannungen gleicher oder benachbarter Frequenzen arbeiten, wobei jedes Netz eine erste, eine zweite und eine dritte, mit der Spannung dieses Netzes arbeitende Phase umfaßt, wobei die Spannung jeder Phase des ersten Netzes und die Spannung der entsprechenden Phase des zweiten Netzes in bezug zueinander um einen konstanten oder zeitlich variierenden Winkel verschoben sind, wobei eine Gesamtheit von rückwirkenden, variablen, dreiphasigen Impedanzen die beiden Netze miteinander verbinden, wobei die rückwirkenden, variablen, dreiphasigen Impedanzen der besagten Gesamtheit gesteuert werden, um (a) drei erste Verbindungen, die jeweils eine erste Suszeptanz (11) zwischen den ersten, zweiten und dritten Phasen des ersten bzw. zweiten Netzes besitzen, (b) drei zweite Verbindungen, die jeweils eine zweite Suszeptanz (12) zwischen der ersten Phase des ersten Netzes und der dritten Phase des zweiten Netzes, zwischen der zweiten Phase des ersten Netzes und der ersten Phase des zweiten Netzes bzw. der dritten Phase des ersten Netzes und der zweiten Phase des zweiten Netzes besitzen, und (c) drei dritte Verbindungen herzustellen, die eine dritte Suszeptanz (13) zwischen der ersten Phase des ersten Netzes und der zweiten Phase des zweiten Netzes, zwischen der zweiten Phase des ersten Netzes und der dritten Phase des zweiten Netzes bzw. der dritten Phase des ersten Netzes und der ersten Phase des zweiten Netzes besitzen, wobei die besagten ersten, zweiten und dritten Suszeptanzen (11, 12 und 13) der besagten ersten, zweiten und dritten Verbindungen mit den rückwirkenden, variablen, dreiphasigen Impedanzen der besagten Gesamtheit variieren, dadurch **gekennzeichnet,** daß über die Gesamtheit von Impedanzen eine gewünschte Wirkleistungsübertragung zwischen dem ersten und zweiten Netz realisiert wird, wobei die variablen, rückwirkenden Imperdanzen variable Kondensatoren und variable Induktanzen umfassen, und daß das System Regelmittel (5) zum Messen von elektrischen Parametern, die wenigstens einer entsprechenden Phase des ersten und zweiten Netzes zugeordnet sind, umfaßt, wobei die elektrischen Parameter den Strom, der in der besagten Phase zwischen dem besagten ersten Netz und dem besagten System fließt, der Strom, der in der besagten Phase zwischen dem besagten Zweiten Netz und dem besagten System fließt, die Spannung der besagten Phase, die an das besagte System durch das besagte erste Netz angelegt ist, und die Spannung der besagten Phase, die an das besagte System durch das besagte zweite Netz angelegt ist, umfassen, wobei die besagten Regelmittel gleichzeitig zum Steuern der dreiphasigen variablen Impedanzen derart dienen, daß die besagten gemessenen elektrischen Parameter eine Wirkleistungsübertragung darstellen, die der gewünschten Wirkleistungsübertragung zwischen dem ersten und zweiten Netz entspricht, wobei eine Blindleistung, die von dem besagten System getragen wird, auf einem gewünschten Niveau gehalten wird.

2. Verbindungssystem gemäß Anspruch 1, dadurch gekennzeichnet, daß die besagten Regelmittel (5) Mittel zum Steuern der dreiphasigen, rückwirkenden, variablen Impedanzen der besagten Gesamtheit als Funktion von gemessenen elektrischen Parametern derart umfassen, daß die Blindleistung verbunden mit der besagten gewünschten Wirkleistungsübertragung annuliert wird, oder derart, daß die besagte Gesamtheit eine bestimmte Menge der Blindleistung entsprechend dem Bedarf des ersten und zweiten Netzes erzeugt oder absorbiert.

3. Verbindungssystem gemäß Anspruch 1, dadurch gekennzeichnet, daß die besagte Gesamtheit von variablen, rückwirkenden Impedanzen drei dreiphasige, variable, rückwirkende Impedanzen aufweist, die drei erste, drei zweite bzw. drei dritte monophasige, variable, rückwirkende Impedanzen (11, 12 und 13) umfassen, wobei die ersten monophasigen variablen Impedanzen (11) entsprechend die drei ersten Verbindungen mit der ersten Suszeptanz, die zweiten monphasigen, variablen Impedanzen (12) entsprechend die drei zweiten Verbindungen mit der zweiten Suszeptanz und die drei dritten monophasigen variablen Impedanzen (13) entsprechend die drei dritten Verbindungen mit der dritten Suszeptanz bilden.

4. Verbindungssystem nach Anspruch 1, dadurch gekennzeichnet, daß jede dreiphasige variable rückwirkende Impedanz drei monophasige variable rückwirkende Impedanzen (11, 12 und 13) aufweist, die jeweils eine Bank von parallel geschalteten Induktanzen (20 bis 25) und Kondensatoren (16 bis 19) mit festem Wert ebenso wie Umschaltmittel (X1 bis X6 und Y1 bis Y4) umfassen, wobei jeder Kondensator (16 bis 19) und jede Induktanz (20 bis 25) durch die Regelmittel (5) unter Zwischenschaltung dieser Umschaltmittel (X1 bis X6 und Y1 bis Y4) gesteuert wird.

5. Verbindungssystem nach Anspruch 4, dadurch gekennzeichnet, daß die Umschaltmittel (X1 bis X6 und Y1 bis Y4) jeder monophasigen variablen Impedanz (11, 12 und 13) ein Thyristorventil (X1 bis X6 und Y1 bis Y4) für jede Induktanz (20 bis 25) und jeden Kondensator (16 bis 19) umfaßt.

6. Verbindungssystem nach Anspruch 5, dadurch gekennzeichnet, daß jede Induktanz (20 bis 25) von einer ersten und einer zweiten Induktanz von gleichem Wert, die in Reihe geschaltet sind, gebildet wird, wobei das der besagten Induktanz (20 bis 25) zugeordnete Thyristorventil (X1 bis X6) in Reihe mit und zwischen die besagten ersten und zweiten Induktanzen von gleichem Wert, die diese Induktanz bilden, geschaltet ist.

7. Verbindungssystem nach Anspruch 5, dadurch gekennzeichnet, daß in jeder monophasigen variablen rückwirkenden Impedanz (11, 12 und 13) jeder Kondensator (16 bis 19) in Reihe mit einer Induktanz (26 bis 29), die parallel mit einem Widerstand (30 bis 33) geschaltet ist, geschaltet ist, wobei das dem besagten Kondensator (16 bis 19) zugeordnete Thyristorventil (Y1 bis Y4) in Reihe mit und zwischen dem Kondensator (16 bis 19) und der besagten, parallel zum Widerstand (30 bis 33) geschalteten Induktanz (26 bis 29) geschaltet ist.

8. Verbindungssystem nach Anspruch 4, dadurch gekennzeichnet, daß die Größen der Induktanzen (20 bis 25) jeder monophasigen variablen rückwirkenden Impedanz (11, 12 und 13) durch den Ausdruck L-(n) = $2^n$L bestimmt sind, wobei L(n) die Größe jeder Induktanz (20 bis 25), L ein vorbestimmter Induktanzwert ist und n von 1 bis x variiert, wobei x die Gesamtzahl von Induktanzen jeder variablen rückwirkenden Impedanz ist.

9. Verbindungssystem nach Anspruch 4, dadurch gekennzeichnet, daß die Kondensatoren (16 bis 19) der monophasigen, variablen, rückwirkenden Impedanz (11, 12 und 13) sämtlich von gleicher Größe sind.

10. Verbindungssystem nach Anspruch 1, dadurch gekennzeichnet, daß jede dreiphasige, variable, rückwirkende Impedanz eine Gruppe von Kondensatoren (39, 40, 41) oder Induktanzen (49 bis 54) von fester Größe und Umschaltmittel (42 oder 55) umfaßt, wobei die besagte Gruppe derart geschaltet ist, daß sie jede Phase des ersten Netzes mit jeder Phase des zweiten Netzes miteinander verbinden kann, und durch die besagten Regelmittel (5) unter Zwischenschaltung dieser Umschaltmittel (42 oder 55) gesteuert ist.

11. Verbindungssystem nach Anspruch 10, dadurch gekennzeichnet, daß die besagten Umschaltmittel (42 oder 55) der besagten Gruppe eine Vielzahl von Thyristorventilen (42 oder 55) umfassen.

12. Verbindungssystem nach Anspruch 10, dadurch gekennzeichnet, daß die Gruppe von Induktanzen (49 bis 54) drei erste Induktanzen (52 bis 54) und drei zweite Induktanzen (49 bis 51) umfassend jeweils eine erste und eine zweite Klemme umfaßt, wobei die drei ersten Induktanzen (52 bis 54) mit ihren ersten Klemmen entsprechend mit den drei Phasen des ersten Netzes und die drei zweiten Induktanzen (49 bis 51) über ihre ersten Klemmen entsprechend mit den drei Phasen des zweiten Netzes verbunden sind, wobei die Umschaltmittel (55) der besagten Gruppe derart geschaltet sind, daß sie die zweiten Klemmen der drei ersten Induktanzen (52 bis 54) mit den zweiten Klemmen der drei zweiten Induktanzen (49 bis 51) verbinden können, um es zu ermöglichen, daß zwischen jeder Phase des ersten Netzes und jeder Phase des zweiten Netzes eine Verbindung über eine erste (52 bis 54) und eine zweite (49 bis 51) Induktanz hergestellt wird.

13. Verbindungssystem nach Anspruch 12, dadurch gekennzeichnet, daß die drei ersten und die drei zweiten Induktanzen (49 bis 54) sämtlich von gleicher Größe sind.

14. Verbindungssystem nach Anspruch 10, dadurch gekennzeichnet, daß die Gruppe von Kondensatoren (39 bis 41) drei Kondensatoren (39 bis 41) umfaßt, die eine erste und eine zweite Klemme umfassen, wobei die ersten Klemmen der drei Kondensatoren (39 bis 41) der besagten Gruppe mit den drei Phasen des ersten bzw. zweiten Netzes und die zweiten Klemmen dieser drei Kondensatoren (39 bis 41) mit den anderen des ersten und zweiten Netzes über die Umschaltmittel (42) der besagten Gruppe verbunden sind, wobei die besagten Umschaltmittel (42) derart angeordnet sind, daß sie die zweiten Klemmen der drei Kondensatoren (39 bis 41) mit den drei Phasen des besagten anderen Netzes verbinden können, um zu ermöglichen, daß zwischen jeder Phase des ersten Netzes und jeder Phase des zweiten Netzes eine Verbindung über ein der besagten drei Kondensatoren (39 bis 41) hergestellt wird.

15. Verbindungssystem nach Anspruch 14, dadurch gekennzeichnet, daß die Kondensatoren (39 bis 41) der besagten Gruppe sämtlich von gleicher Größe sind.

16. Verbindungssystem nach Anspruch 14, dadurch gekennzeichnet, daß die Umschaltmittel (42) der besagten Gruppe entsprechend mit den drei Phasen des besagten anderen Netzes unter Zwischenschaltung von drei Impedanzen, jeweils gebildet durch eine Induktanz (43 bis 45) in Parallelschaltung mit einem Widerstand (46 bis 48), verbunden sind.

17. Verbindungssystem nach Anspruch 1, dadurch gekennzeichnet, daß die gemessenen elektrischen Parameter drei erste und drei zweite an die besagte Gesamtheit angelegte und von Phasen des ersten bzw. zweiten Netzes stammende Spannungen und drei erste und drei zweite, bezüglich der besagten Gesamtheit ein- oder ausgehende und den besagten Phasen des ersten bzw. zweiten Netzes entsprechende Ströme umfassen, wobei die besagten Regelmittel (5) ein Meßsystem (56) zum Messen der ersten und zweiten Spannungen und der ersten und zweiten Ströme und zum Erzeugen von Ausgangssignalen, repräsentativ für die gemessenen ersten Spannungen, die gemessenen zweiten Spannungen, einen Verschiebungswinkel für jede Phase des ersten bzw. zweiten Netzes zwischen der ersten und zweiten gemessenen Spannung dieser entsprechenden Phase, eine aktuelle Wirkleistungsübertragung über die besagte Gesamtheit zwischen dem ersten und zweiten Netz und ein Maß der Blindleistung, die bei dieser Wirkleistungsübertragung beteiligt ist, aus diesen Spannungen und Strömen.

18. Verbindungssystem nach Anspruch 17, dadurch gekennzeichnet, daß die Regelmittel (5) einen ersten Eingang (PREF), an den ein erster Bezugswert repräsentativ für die gewünschte Wirkleistungsübertragung zwischen dem ersten und zweiten Netz, gelegt wird, einen zweiten Eingang (QREF), an den ein zweiter Bezugswert repräsentativ für das gewünschte Niveau der bei der gewünschten Wirkleistungsübertragung beteiligten Blindleistung gelegt wird, und eine Vorrichtung (57 bis 60) zum Erzeugen eines Signals für die geforderte Wirkleistung und ein Signal für die geforderte Blindleistung aus dem ersten und zweiten Bezugswert und aus Ausgangssignalen repräsentativ für die aktuelle Wirkleistungsübertragung über die besagte Gesamtheit und dem Maß der bei dieser aktuellen Wirkleistungsübertragung beteiligten Blindleistung umfassen.

19. Verbindungssystem nach Anspruch 18, dadurch gekennzeichnet, daß die besagte Vorrichtung zum Erzeugen (57 bis 60) einen ersten Subtraktionsschaltkreis (57) und einen Proportional-Integral-Wirkleistungsregler (59) umfaßt, wobei der erste Subtraktionsschaltkreis (57) eine Differenz zwischen der ersten Bezugsgröße und dem für die aktuelle Wirkleistungsübertragung repräsentativen Ausgangssignal bildet und eine Signal repräsentativ für diese Differenz an den Wirkleistungsregler (59) liefert, der das geforderte Wirkleistungssignal abgibt, wobei die besagte Vorrichtung zum Erzeugen (57 bis 60)

20

gleichzeitig einen zweiten Subtraktionskreis (58) und einen Proportional-Integral-Blindleistungsregler (60) umfaßt, wobei der zweite Subtraktionskreis (58) eine Differenz zwischen der zweiten Bezugsgröße und dem Ausgangssignal repräsentativ für die Messung der bei der aktuellen Wirkleistungsübertragung beteiligten Blindleistung bildet und ein Signal repräsentativ für diese Differenz an den Blindleistungsregler (60) liefert, der das geforderte Blindleistungssignal liefert.

20. Verbindungssystem nach Anspruch 18, dadurch gekennzeichnet, daß die Regelmittel (5) ein Untersystem (61) zum Berechnen von Werten, die an die erste, zweite und dritte Suszeptanz (11, 12 und 13) der besagten ersten, zweiten und dritten Verbindungen zu geben sind, aus den besagten Ausgangssignalen repräsentativ für erste gemessene Spannungen, zweite gemessene Spannungen, Verschiebungswinkel zwischen den ersten und den zweiten gemessenen Spannungen und aus dem Signal für die geforderte Wirkleistung und dem Signal für die geforderte Blindleistung und zum Modifizieren der variablen rückwirkenden Impedanzen der besagten gesamtheit, um diese Werte an die erste, zweite und dritte Suszeptanz (11, 12 und 13) der besagten Verbindungen zu geben, um die gewünschte Wirkleistungsübertragung über die besagte Gesamtheit zwischen dem ersten und zweiten Netz zu bewirken und die mit der besagten gewünschten Wirkleistungsübertragung verbundene Blindleistung auf dem gewünschten Niveau zu halten.

21. Verbindungssystem nach Anspruch 20, dadurch gekennzeichnet, daß die besagte Gesamtheit eine Vielzahl von Thyristorventilen (10) umfaßt, die es den Regelmitteln (5) erlauben, die variablen rückkoppelnden Impedanzen der besagten Gesamtheit zu steuern, wobei die besagten Regelmittel (5) Mittel zum Synchronisieren umfassen, die mit dem besagten Untersystem (61) zum Einschalten der Thyristorventile (10) derart zusammenarbeiten, daß die Übergangskomponenten der Ströme in den variablen rückkoppelnden Impedanzen während des Einschaltens der besagten Thyristorventile reduziert werden.

22. Verbindungssystem nach Anspruch 1, dadurch gekennzeichnet, daß die drei Phasen wenigstens eines der beiden Netze mit der besagten Gesamtheit über einen Transformator (3 und 4) verbunden sind.

23. Verbindungssystem nach Anspruch 22, dadurch gekennzeichnet, daß der Transformator (3 und 4) drei Primär- und drei Sekundärwicklungen umfaßt, wobei die drei Primärwicklungen dieses Transformators (3 und 4) mit den drei Phasen des entsprechenden Netzes und sternförmig mit dem an Masse liegenden Nulleiter und die drei Sekundärwicklungen dieses Transformators (3 und 4) mit der besagten Gesamtheit und in Dreiecksschaltung verbunden sind.

24. Verbindungssystem nach Anspruch 1, dadurch gekennzeichnet, daß wenigstens eines der beiden Netze mit der besagten Gesamtheit über einen Transformator (3 und 4) verbunden ist, wobei dieser Transformator (3 und 4) mit den drei Phasen dieses Netzes verbundene Primärwicklungen und ferner mit der besagten gesamtheit verbundene Sekundärwicklungen umfaßt, die mit den Primärwicklungen zum Erzeugen eines an die besagte Gesamtheit angelegten Systems von polyphasigen Spannungen aus den drei Phasen dieses Netzes zusammenarbeiten.

25. Verbindungssystem nach Anspruch 1, dadurch gekennzeichnet, daß die besagten Regelmittel (5), wenn Oszillationen in wenigstens einem der Netze und als Funktion von gemessenen elektrischen Parametern auftreten, Mittel zum Steuern der dreiphasigen variablen rückkoppelnden Impedanzen der besagten Gesamtheit umfassen, um über der besagten Gesamtheit eine zum Zweck des Dämpfens dieser Oszillationen modulierte Wirkleistungsübertragung zwischen den beiden Netzen zu bewirken, wobei diese modulierte Wirkleistungsübertragung dann die besagte gwünschte Wirkleistungsübertragung bildet.

26. Verfahren zum Verbinden eines ersten und eines zweiten dreiphasigen asynchronischen oder synchronischen Wechselstromnetzes, die mit Wechselspannungen gleicher oder benachbarter Frequenzen arbeiten, wobei jedes Netz eine erste, eine zweite und eine dritte, mit der Spannung dieses Netzes arbeitende Phase umfaßt, wobei die Spannung jeder Phase des ersten Netzes und die Spannung der entsprechenden Phase des zweiten Netzes in bezug zueinander um einen konstanten oder zeitlich variierenden Winkel verschoben sind, wobei eine Gesamtheit von rückwirkenden, variablen, dreiphasigen Impedanzen die beiden Netze miteinander verbinden, wobei die rückwirkenden, variablen, dreiphasigen Impedanzen der besagten Gesamtheit gesteuert werden, um (a) drei erste Verbindungen, die jeweils eine erste Suszeptanz (11) zwischen den ersten, zweiten und dritten Phasen des ersten bzw.

zweiten Netzes besitzen, (b) drei zweite Verbindungen, die jeweils eine zweite Suszeptanz (12) zwischen der ersten Phase des ersten Netzes und der dritten Phase des zweiten Netzes, zwischen der zweiten Phase des ersten Netzes und der ersten Phase des zweiten Netzes bzw. der dritten Phase des ersten Netzes und der zweiten Phase des zweiten Netzes besitzen, und (c) drei dritte Verbindungen herzustellen, die eine dritte Suszeptanz (13) zwischen der ersten Phase des ersten Netzes und der zweiten Phase des zweiten Netzes, zwischen der zweiten Phase des ersten Netzes und der dritten Phase des zweiten Netzes bzw. der dritten Phase des ersten Netzes und der ersten Phase des zweiten Netzes besitzen, wobei die besagten ersten, zweiten und dritten Suszeptanzen (11, 12 und 13) der besagten ersten, zweiten und dritten Verbindungen mit den rückwirkenden, variablen, dreiphasigen Impedanzen der besagten Gesamtheit variieren, wobei das Verfahren fdadurch gekennzeichnet ist, daß

man über die Gesamtheit von Impedanzen eine gewünschte Wirkleistungsübertragung zwischen dem ersten und zweiten Netz realisiert, wobei die variablen, rückwirkenden Imperdanzen variable Kondensatoren und variable Induktanzen umfassen,

man elektrische Parameter mißt, die wenigstens einer entsprechenden Phase des ersten und zweiten Netzes zugeordnet sind, wobei die elektrischen Parameter den Strom, der in der besagten Phase zwischen dem besagten ersten Netz und dem besagten System fließt, der Strom, der in der besagten Phase zwischen dem besagten zweiten Netz und dem besagten System fließt, die Spannung der besagten Phase, die an das besagte System durch das besagte erste Netz angelegt ist, und die Spannung der besagten Phase, die an das besagte System durch das besagte zweite Netz angelegt ist, umfassen, und

man die dreiphasigen variablen rückkoppelnden Impedanzen derart steuert, daß die besagten gemessenen elektrischen Parameter eine Wirkleistungsübertragung darstellen, die der gewünschten Wirkleistungsübertragung zwischen dem ersten und zweiten Netz entspricht, wobei eine Blindleistung, die von dem besagten System getragen wird, auf einem gewünschten Niveau gehalten wird.

27. Verfahren zum Verbinden nach Anspruch 26, dadurch gekennzeichnet, daß man die dreiphasigen variablen rückkoppelnden Impedanzen der besagten Gesamtheit als Funktion der gemessenen elektrischen Parameter derart steuert, daß die mit der besagten gewünschten Wirkleistungsübertragung verbundene Blindleistung annuliert wird, oder derart, daß die besagte Gesamtheit eine bestimmte Menge der Blindleistung gemäß den Bedürfnissen des ersten und zweiten Netzes absorbiert oder erzeugt.

28. Verfahren zum Verbinden nach Anspruch 26, dadurch gekennzeichnet, daß die gemessenen elektrischen Parameter für jede entsprechende Phase des ersten und zweiten Netzes eine erste und eine zweite Spannung angelegt an die besagte Gesamtheit bzw. von der dieser entsprechenden Phase des ersten bzw. zweiten Netzes stammend und einen ersten und einen zweiten Strom in die besagte Gesamtheit eingehend oder aus dieser herausgehend und auch entsprechend dieser korrespondierenden Phase des ersten bzw. zweiten Netzes umfassen.

29. Verfahren zum Verbinden nach Anspruch 26, dadurch gekennzeichnet, daß man die variablen rückkop-pelnden Impedanzen der besagten Gesamtheit auch als Funktion einer ersten Bezugsgröße repräsentativ für die gewünschte Wirkleistungsübertragung zwischen dem ersten und zweiten Netz und einer zweiten Bezugsgröße repräsentativ für das gewünschte Niveau der mit der gewünschten Wirkleistungsübertragung verbundenen Blindleistung steuert.

30. Verfahren zum Verbinden nach Anspruch 26, dadurch gekennzeichnet, daß man die drei Phasen wenigstens eines der beiden Netze mit der besagten Gesamtheit über einen Transformator (3 und 4) verbindet.

31. Verfahren zum Verbinden nach Anspruch 30, dadurch gekennzeichnet, daß man mit Hilfe des besagten Transformators (3 und 4) und aus den drei Phasen des mit diesem Transformator (3 und 4) verbundenen Netzes ein polyphasiges Spannungssystem erzeugt, das an die besagte Gesamtheit von variablen rückkoppelnden Impedanzen angelegt wird.

32. Verfahren zum Verbinden nach Anspruch 26, dadurch gekennzeichnet, daß die besagten dreiphasigen variablen rückkoppelnden Impedanzen der besagten Gesamtheit, wenn Oszillationen in wenigstens einem der Netze als Funktion der besagten gemessenen elektrischen Parametern auftreten, derart gesteuert werden, daß über der besagten Gesamtheit eine zum Zweck des Dämpfens der besagten Oszillationen modulierte Wirkleistungsübertragung zwischen den beiden Netzen bewirkt wird, wobei diese modulierte Wirkleistungsübertragung dann die besagte gwünschte Wirkleistungsübertragung bildet.

FIG:1

EP 0 129 492 B1

FIG: 2

FIG : 3 A

FIG : 3 B

EP 0 129 492 B1

FIG: 4